# EUROPÄISCHE PATENTSCHRIFT

(11) **EP 2 990 308 B1**
(45) Veröffentlichungstag und Bekanntmachung des Hinweises auf die Patenterteilung: **21.12.2016**
(21) Anmeldenummer: 15182379.6
(22) Anmeldetag: 25.08.2015
(51) Int. Cl.: B62D 21/11, B62D 29/00, B29L 31/30, B29K 105/08, B29K 77/00, B29C 43/16, B29K 105/00, B62D 25/00, B29K 105/12, B29K 23/00, B62D 25/20

(54) **ACHSTRÄGER FÜR EIN KRAFTFAHRZEUG SOWIE VERFAHREN ZUR HERSTELLUNG EINES ACHSTRÄGERS**
CROSS-MEMBER FOR A MOTOR VEHICLE AND METHOD FOR PRODUCING A CROSS-MEMBER
SUPPORT D'ESSIEU POUR UN VEHICULE AUTOMOBILE ET PROCEDE DESTINE A LA FABRICATION D'UN SUPPORT D'ESSIEU

(30) Priorität: 25.08.2014 DE 102014112090
(43) Veröffentlichungstag der Anmeldung: 02.03.2016
(73) Patentinhaber: Benteler Automobiltechnik GmbH, 33102 Paderborn (DE); Quadrant Plastic Composites AG, 5600 Lenzburg 1 (CH)
(72) Erfinder: Graefe, Joachim, 97877 Wertheim (DE); Franzke, Andreas, 33102 Paderborn (DE); Körner, Matthias, 33613 Bielefeld (DE); Mirau, Alex, 33161 Hövelhof (DE); Seibt, Oliver, 33102 Paderborn (DE); Tröster, Thomas Prof. Dr., 33154 Salzkotten (DE); Moritzer, Elmar Prof. Dr., 33175 Bad Lippspringe (DE); Budde, Christopher, 32758 Detmold (DE); Pöhler, Simon, 49086 Osnabrück (DE)
(74) Vertreter: Griepenstroh, Jörg

(56) Entgegenhaltungen:
- EP-A1- 2 399 727
- DE-A1-102006 017 225
- DE-A1-102008 006 006
- DE-A1-102010 037 459
- DE-A1-102011 085 383
- DE-A1-102011 115 387

## Beschreibung

Die Erfindung betrifft einen Achsträger für ein Kraftfahrzeug, umfassend eine Oberschale, eine Unterschale aus einem faserverstärkten Kunststoff sowie eine Rippenstruktur zur Aussteifung der Oberschale. Weiterhin betrifft die Erfindung ein Herstellungsverfahren für einen Achsträger.

Im modernen Automobilbau ist das Bestreben vorrangig, möglichst leichte Kraftfahrzeugkarosserien zu entwerfen, um den CO₂-Ausstoß und die Umweltbelastung dadurch stark zu reduzieren. Aus diesem Grund kommen im Automobilbau verstärkt Kunststoffmaterialien, die insbesondere faserverstärkt sein können, sowie hoch- und höchstfeste Stahlbaustoffe sowie Aluminiumwerkstoffe zum Einsatz.

Auch im Bereich des Fahrwerks wird der Leichtbau angestrebt, wobei im Feld der Stahlbauteile eine Gewichtseinsparung, insbesondere durch die Verwendung geeigneter Werkstoffe sowie durch die Bauweise in Blechschalen, Wandreduzierung und ähnliche Maßnahmen, erreicht wird. Der Leichtbau kann aber insbesondere durch den Einsatz von Kunststoffmaterialien weiter vorangetrieben werden. So offenbart die EP 2 578 473 A1 einen Achsträger aus Kunststoff, der Querträger und Längsträger umfasst. Der Achsträger ist aus zwei Halbschalen aus Kunststoff aufgebaut, wobei mindestens eine der Halbschalen durch Verstärkungsrippen innerhalb der Querträger und Längsträger versteift wird. Das verwendete Material ist ein faserverstärkter Kunststoff.

Ein ähnlicher Achsträger ist auch durch die DE102010037459 und die DE102006017225 bekannt.

Dem Vorteil des geringen Gewichts steht gegenüber, dass ein solcher Achsträger aufgrund der verwendeten Materialien relativ teuer ist. In technologischer Hinsicht ist nachteilig, dass bei preislich interessanten Kunststoffen die Steifigkeit nicht den Anforderungen an die Fahrdynamik genügt. Einige Kunststoffe neigen zudem dazu, unter Belastung bzw. bei Überlastung zu brechen. Dadurch geht die Steifigkeit des Achsträgers verloren und es besteht die Gefahr, durch die instabil werdende Konstruktion Nachfolgeschäden zu erzeugen oder das Auto während eines Unfalls unkontrollierbar werden zu lassen.

Vor dem Hintergrund dieses Standes der Technik ist es die Aufgabe der vorliegenden Erfindung, einen Achsträger für ein Kraftfahrzeug bereitzustellen, der gewichtsparend konstruiert und einfach herzustellen ist und zudem die Nachteile des Standes der Technik vermeidet. Weiterhin ist es die Aufgabe der vorliegenden Erfindung, ein entsprechendes Herstellungsverfahren für einen Achsträger für ein Kraftfahrzeug bereitzustellen.

Die gegenständliche Aufgabe wird gelöst durch einen Achsträger gemäß Patentanspruch 1. Besondere Ausgestaltungen des erfindungsgemäßen Achsträgers sind Inhalt der Patentansprüche 2 bis 11.

Die verfahrensmäßige Aufgabe wird gelöst durch ein Verfahren zur Herstellung eines Achsträgers gemäß Patentanspruch 12, wobei besondere Ausgestaltungen des Verfahrens in den Ansprüchen 13 bis 18 beschrieben werden.

Ein erfindungsgemäßer Achsträger für ein Kraftfahrzeug umfasst eine Oberschale, eine Unterschale aus einem faserverstärkten Kunststoff sowie eine Rippenstruktur zur Aussteifung der Oberschale, wobei die Oberschale aus einem metallischen Material besteht und die Rippenstruktur aus einem kurzfaserverstärkten Kunststoff besteht und einstückig aus der Unterschale ausgebildet ist.

Einstückig bedeutet im Rahmen der Erfindung, dass Unterschale und Rippenstruktur miteinander verschmolzen sind. Insbesondere bestehen beide aus demselben Kunststoff, sind also in diesem Sinne werkstoffeinheitlich ausgebildet, wobei sich die Fasermaterialien aber unterscheiden können. So können für die Unterschale nicht nur Kurzfasern, sondern auch Gewebe oder Gelege oder andere Endlosfasern verwendet werden.

Insbesondere die Verwendung der Oberschale aus einem metallischen Material schafft die eben beschriebenen technischen Nachteile des genannten Standes der Technik aus der Welt. In einem Schadensfall wird die Oberschale aus metallischem Material zwar beschädigt und verbogen, jedoch ist sie gegenüber im Fahrzeug verwendeten Kunstoffen ausreichend duktil, so dass kein Bruch der Oberschale stattfindet. Dies hat zur Folge, dass der gesamte Achsträger zwar beschädigt ist, aber noch über eine ausreichende Steifigkeit verfügt, so dass die gesamte Fahrwerkskonstruktion dadurch nicht instabil wird.

Gleichzeitig trägt die Unterschale aus faserverstärktem Kunststoff dazu bei, das Gewicht des gesamten Achsträgers stark zu reduzieren. Durch die Rippenstruktur, die einstückig aus der Unterschale ausgebildet ist, erhält die Gesamtkonstruktion eine zusätzliche Stabilität, die insbesondere den Belastungen während des Fahrbetriebes gewachsen ist.

Durch das beschriebene Multimaterialsystem aus Metall und faserverstärktem Kunststoff werden die positiven Eigenschaften der jeweiligen Werkstoffgruppen miteinander verbunden. Durch die Verwendung von hoch- und höchstfesten Stahlwerkstoffen oder hochfesten Aluminiumlegierungen (5000er oder 6000er Aluminiumlegierungen) kann die Oberschale äußerst gewichtssparend in sehr dünnwandiger Ausführung hergestellt werden. Durch den lokalen Einsatz der Faserverbundwerkstoffe in der Unterschale und der Rippenstruktur wird weiterer Gewichtsvorteil geschaffen und durch den gezielten Einsatz des Werkstoffs ein äußerst kostengünstiger Achsträger erzeugt.

Die Oberschale aus einem metallischen Material bildet gewissermaßen den Konturgeber der Gesamtkonstruktion, wohingegen der faserverstärkte Kunststoff der Stabilisierung und Aussteifung dient. Zusätzlich ermöglicht die Unterschale eine Funktionsintegration als Unterbodenschutz oder als Schubfeld. Diese beiden zusätzlichen Aspekte kommen insbesondere dann zum Tragen, wenn die Unterschale im Wesentlichen flächig und geschlossen ausgestaltet ist und die Oberschale vollständig abschließt. Diese konkreten Ausführungsformen sind allerdings nicht zwingend vorgesehen, sondern müssen im Rahmen der Gesamtkonstruktion und/oder der Kundenanforderungen betrachtet werden.

Als Matrixmaterial für die faserverstärkten Kunststoffe wird bevorzugt ein thermoplastischer Kunststoff, insbesondere Polypropylen oder Polyamid, eingesetzt. Um die Rippenstruktur zur Aussteifung der Oberschale möglichst filigran ausbilden zu können, wird zu deren Herstellung Kurzfasermaterial verwendet. Unter Kurzfasern werden im Rahmen der Erfindung Fasermaterialien mit einer Länge von 0,1 Millimetern bis zu 10 Zentimeter verstanden. Insbesondere können im Rahmen der Erfindung die Kurzfasern oder auch das Kurzfasermaterial in Form von Wirrfasern oder allgemein anisotrop ausgerichteten Fasern vorliegen. Der Begriff Kurzfasern ist im Gegensatz zu den ausgerichteten Fasern in gewebten oder gelegten Fasermaterialien zu stellen, wo die Fasern üblicherweise eine Länge von 10 cm oder mehr aufweisen. Man spricht dann von Endlosfasern.

Als Grundstoff für die Fasern sind die üblichen Materialien denkbar. Dies sind beispielsweise und nicht abschließend Glas, Kohlenstoff, Basalt usw. Das jeweils passende Material wird je nach Anforderungen an den Achsträger ausgewählt.

Die Oberschale hat insbesondere die Aufgabe, Befestigungen für andere Anbauteile, wie Lenker, Lenkgetriebe und Stabilisator, aufzunehmen. Auch die Anbindung an den Rest der Karosserie wird über die Oberschale realisiert. Daher weist die Oberschale in einer bevorzugten Ausführungsform Anbindungsstellen für Fahrzeugteile auf, wobei zumindest zwei der Anbindungsstellen als Anbindungstürme ausgebildet sind. Die Anbindungstürme sind besonders bevorzugt als separate Bauteile ausgebildet.

Die Anbindungstürme dienen insbesondere der Anbindung des Achsträgers an die übrige Fahrzeugstruktur. Sie ragen weit über den Rest des Achsträgers hinaus und sind in einem Umformverfahren äußerst schwierig einstückig mit dem übrigen Achsträger herzustellen. Bedingt durch die dort notwendigen hohen Umformgrade ist die Gefahr sehr hoch, dass das metallische Material an diesen Stellen bei dem Umformvorgang reißt. Daher werden die Anbindungstürme bevorzugt als separate Bauteile ausgebildet, die durch einen Fügevorgang, beispielsweise einem Schweißvorgang oder einem Lötvorgang, bevorzugt stoffschlüssig mit der Oberschale verbunden werden. Die Anbindungsstellen für weitere Fahrwerksteile können dabei auch durch Metallhülsen oder metallische Einleger verstärkt sein, um die Befestigung zu erleichtern und dynamische Belastungen besser ausgleichen zu können.

Eine weitere bevorzugte Ausführungsform der Erfindung sieht vor, dass die Unterschale Versteifungsabschnitte aufweist, die zumindest bereichsweise in die Anbindungstürme hineinragen. Die Unterschale des erfindungsgemäßen Achsträgers ist größtenteils flächig ausgebildet. Das meint, dass die Unterschale keine großen Umformgrade aufweist. Demgegenüber stellen aber die über den Achsträger hinausragenden Anbindungstürme besondere Anforderungen hinsichtlich der Steifigkeit bei dynamischer Belastung. Deshalb weist die Unterschale Abschnitte auf, die zur Oberschale weisend gebogen sind, so dass die Abschnitte in die Anbindungstürme hineinragen und diese zusätzlich versteifen. Dies wird allerdings nicht durch eine lokale Umformung des faserverstärkten Kunststoffes an sich erreicht, vielmehr ist das der Unterschale zugrundeliegende Halbzeug bevorzugt so gestaltet, dass die die Anbindungstürme unterstützenden Versteifungsabschnitte beim Formvorgang erzeugt werden.

Weiterhin bevorzugt ist die Rippenstruktur optimiert für die Belastung im Fahrbetrieb ausgebildet. Insbesondere bedeutet das, dass die Rippenstruktur bevorzugt im Bereich der Anbindungsstellen ausgebildet ist. Während der Fahrt kommt es, bedingt durch Lenktätigkeiten und Kurvenfahrten, zu andauernden dynamischen Belastungen in den einzelnen Bestandteile des Fahrwerks, wie Lenker, Stabilisatoren usw. Die dort wirkenden Kräfte werden insbesondere durch den Achsträger aufgenommen und dort ganz besonders durch die Anbindungsstellen der entsprechenden Fahrwerksteile am Achsträger. Das bedeutet, dass an diesen Stellen des Achsträgers besondere Anforderungen hinsichtlich der Steifigkeit gesetzt werden. Die Rippenstruktur ist also so ausgebildet, dass sie insbesondere die Bereiche, in denen die Anbindungsstellen der Oberschale liegen, besonders aussteifen. Das hat zur Folge, dass nicht jeder Hohlraum zwischen Ober- und Unterschale von der Rippenstruktur ausgesteift bzw. ausgefüllt ist. Dies führt zu einer Materialeinsparung bei der Rippenstruktur, die ebenfalls wieder einen Beitrag zur Gewichtseinsparung leistet. Andererseits wird der Achsträger dadurch auch in kostentechnischer Hinsicht optimiert, als dass das teure Faserverbundmaterial nur an den wirklich notwendigen Stellen eingesetzt ist.

Aus den gleichen Gründen weist die Unterschale bevorzugt eine lokal unterschiedliche Schalendicke auf. Dadurch wird das Faserverbundmaterial optimiert an die auftretenden Kräfte und die Konstruktionsanforderungen eingesetzt.

In der Weiterführung dieses Gedankens weist die Unterschale in einer besonders bevorzugten Ausführung der Erfindung Ausnehmungen auf. Das bedeutet, dass nicht benötigtes Material gar nicht erst eingesetzt wird und somit die höchstmögliche Gewichtseinsparung vorgenommen wird. Zusätzlich haben die Ausnehmungen in der Unterschale den Vorteil, dass sich innerhalb des Achsträgers kein Spritzwasser sammeln kann, das hinsichtlich Korrosionsbeständigkeit des gesamten Bauteils Probleme verursachen kann.

Eine weitere besondere Ausgestaltung des erfindungsgemäßen Achsträgers sieht vor, dass die Oberschale zumindest zwei Längsstreben und zumindest eine die Längsstreben verbindende Querstrebe aufweist. Damit wird die Oberschale ihrer Funktion als Konturgeber für den Achsträger gerecht. Gleichzeitig wird auch hier der Einsatz der ebenfalls kostspieligen hoch- und höchstfesten Werkstoffe gezielt vorgenommen. Das Ergebnis ist ein kostengünstiger und belastungsoptimierter Achsträger.

Dies wird weiterhin bevorzugt dadurch noch verbessert, dass die Längsstreben und zumindest eine Querstrebe einen U-förmigen oder V-förmigen oder hutförmigen Querschnitt aufweisen. Unabhängig von der genauen Ausgestaltung sollte der Querschnitt einen hohen Flächenträgheitsindex aufweisen.

Weiterhin bevorzugt handelt es sich bei der Faserverstärkung der Unterschale um ein Gewebe oder ein Gelege. Unter einem Gewebe versteht der Fachmann ein textiles Material, in dem ausgerichtete Fasern mit einer Länge von 10 Zentimetern bis hin zu mehreren Metern miteinander verwebt werden. Das Textil weist dabei mehrere ausgerichtete Fasern oder Faserbündel mit unterschiedlichen Vorzugsrichtungen auf, so dass bei einem Gewebe zunächst mehrere Vorzugsrichtungen auftreten. Bei einem Gelege besteht das Textil hingegen aus Fasern oder Faserbündeln, die nur durch Fäden miteinander verbunden sind. Auch Gelege können dabei multiaxial gestaltet sein.

Durch den Einsatz von solchen Langfasergebilden können insbesondere crashstabile Bauteile mit hoher Stabilität hergestellt werden. Durch die hohe Steifigkeit der so gestalteten Unterschale kann diese beispielsweise als Schubfeld wirken und somit zur Stabilität des Gesamtachsträgers beitragen.

Im Rahmen der Erfindung ist es auch möglich, zusätzlich zu den Langfasermaterialien, wie Geweben oder Gelegen, in der Unterschale Wirrfasern, Kurzfasermaterialien oder ähnliche Werkstoffe zu verwenden.

Obwohl die faserverstärkte Unterschale hauptsächlich der Aussteifung der Oberschale zusammen mit der Rippenstruktur dient, kann sie aber ebenfalls mit Aufnahmen für Anbauteile, wie beispielsweise Anschraubhülsen, versehen werden. Bevorzugt weist die Unterschale also Anbindungsstellen für Fahrwerksteile auf, die insbesondere mit metallischen Verstärkungselementen versehen sind. Solche Verstärkungselemente können beispielsweise Anbindungshülsen aus Metall oder Einleger oder Anschraubhülsen oder ähnliche Bauteile sein.

Bevorzugt besteht die Oberschale aus einem Leichtmetall, insbesondere aus Aluminium. Die Verwendung von Aluminium oder Aluminiumlegierungen, insbesondere der hochfesten 5000er und 6000er Legierungen, bietet durch das geringe Gewicht des Aluminiums im Zusammenspiel mit den faserverstärkten Kunststoffen das größte Potential für die Einsparung von Gewicht. Grundsätzlich sind Blechdicken im Bereich zwischen 1,5 mm und 3 mm erreichbar, so dass sich Gewichtseinsparungen gegenüber einem korrespondierenden Bauteil, das ausschließlich aus Aluminium besteht, von bis zu 20 % ergeben.

Die Erfindung betrifft weiterhin ein Verfahren zur Herstellung eines Achsträgers aus einer Oberschale, einer Unterschale aus einem faserverstärkten Kunststoff sowie einer Rippenstruktur zur Aussteifung der Oberschale mit folgenden Verfahrensschritten:
- Bereitstellen einer Oberschale aus einem metallischen Material,
- Bereitstellen eines Stapels aus Lagen eines faserverstärkten Kunststoffes mit einer thermoplastischen Matrix, wobei eine erste Lage aus zumindest einer Platte erster Art mit Fasern in Form von Geweben und/oder Gelegen und/oder Kurzfasern besteht und eine zweite Lage aus zumindest einer Platte zweiter Art mit Fasern in Form von Kurzfasern besteht,
- Erwärmen des Stapels auf eine Temperatur, die größer ist als die Schmelztemperatur der thermoplastischen Matrix, vor, während oder nach dem Einbringen des Stapels in ein Fließpresswerkzeug,
- Umformen des Stapels in einem Fließpressvorgang, so dass die erste Lage zu der Unterschale umgeformt wird und die zweite Lage zu der Rippenstruktur umgeformt wird, wobei Unterschale und Rippenstruktur einstückig ausgebildet werden,
- Entformen von Unterschale und Rippenstruktur,
- Fügen von Oberschale, Unterschale und Rippenstruktur zum Achsträger.

Die Aufzählung dieser einzelnen Verfahrensschritte beinhaltet keine konkrete Reihenfolge der einzelnen Schritte. Insbesondere ist das Bereitstellen der Oberschale aus einem metallischen Material völlig unabhängig von dem Bereitstellen des Lagenstapels bzw. dessen Umformung im Fließpresswerkzeug.

Unter dem Bereitstellen einer Oberschale aus einem metallischen Material wird das Herstellen der Oberschale, bevorzugt aus einer Platine aus Aluminium oder Stahlwerkstoffen, verstanden. Die möglichen dabei zum Einsatz kommenden Verfahren hängen vom verwendeten Material sowie vom zu erzeugenden Umformgrad ab. Bei Stahlmaterialien sind Verfahren zur Warm- und Kaltumformung möglich. Als Werkstoff kommen hier hoch- und höchstfeste Stahlmaterialien zum Einsatz. Aluminium oder Aluminiumlegierungen können ebenso warm- wie auch kaltumgeformt werden. Dabei werden bevorzugt 5000er und 6000er Aluminiumlegierungen verwendet. Nach dem Umformen der Oberschale aus einer Platine ist es möglich, zusätzliche Schritte, wie Beschneiden oder spanabhebende Bearbeitungen oder andere mechanischen Bearbeitungen, durchzuführen.

Der Stapel aus Lagen eines faserverstärkten thermoplastischen Kunststoffes wird je nach den Anforderungen an das Endbauteil zusammengestellt. Aus der ersten Lage aus zumindest einer Platte erster Art wird später die Unterschale geformt. Je nach der vorgesehenen Wanddicke der Unterschale kommt hierbei eine Platte oder auch mehrere Platten erster Art zum Einsatz. Diese Platten erster Art beinhalten Fasern in Form von Geweben und/oder Gelegen und/oder Kurzfasern. Die genaue Zusammensetzung ist wiederum von den Rahmenbedingungen der Konstruktion abhängig. Durch die gezielte Wahl der Fasermaterialien können die bevorzugten Eigenschaften hinsichtlich Steifigkeit und Umformbarkeit gezielt eingestellt werden.

Die Platten erster Art können auch besonders zugeschnitten werden, beispielsweise um die Versteifungsabschnitte für die Anbindungstürme ausbilden zu können.

Aus der zweiten Lage aus zumindest einer Platte zweiter Art werden späterhin die Rippen der Rippenstruktur zur Aussteifung der Oberschale ausgeformt. Da die Rippenstruktur Wanddicken von nur wenigen Millimetern aufweist, kommen hier Kurzfasern zum Einsatz. Dadurch ist es möglich, sehr filigrane und präzise Strukturen aus dem faserverstärkten Kunststoffmaterial auszuformen.

Durch die Verwendung von thermoplastischem Kunststoff können äußerst einfach die Platten erster Art und zweiter Art bereitgestellt und gehandhabt werden. Thermoplastische Kunststoffe, wie beispielsweise Polypropylen oder Polyamid, können erwärmt werden, danach umgeformt werden und härten dann wieder aus. Die so gestalteten Platten erster Art und zweiter Art sind je nach ihrer Dimensionierung formstabil und teilweise flexibel und können sehr einfach aufeinander gestapelt werden. Gegebenenfalls ist es möglich, die einzelnen Platten durch einen Klebstoff oder Binder untereinander zu fixieren.

Der Faserlagenstapel wird dann auf eine Temperatur erwärmt, die größer ist als die Schmelztemperatur der thermoplastischen Matrix. Die Schmelztemperatur beträgt je nach verwendetem Material zwischen 160°C und 260°C Die thermoplastische Matrix ist dann verformbar. In diesem Zustand verkleben die einzelnen Lagen bzw. Platten miteinander und können somit auch sehr einfach transportiert werden. Das Erwärmen geschieht vor, während oder nach dem Einbringen des Faserlagenstapels in ein Fließpresswerkzeug. Das Erwärmen kann beispielsweise in einem Ofen, beispielweise einem Förderofen, vor dem Einbringen in das Werkzeug geschehen. Es ist auch vorstellbar, dass während des Einbringens mittels eines Manipulators der Faserlagenstapel mit einer Wärmelampe erwärmt wird und es ist auch vorstellbar, dass der Faserlagenstapel innerhalb des Werkzeuges durch geeignete Temperierungseinrichtungen erwärmt wird. Die Temperatur liegt dabei bevorzugt etwa 50°C höher als die Schmelztemperatur der thermoplastischen Matrix, da das Material dann dünnflüssiger ist und im darauffolgenden Fließpressvorgang leichter verarbeitet werden kann. Auch wenn der Faserlagenstapel vor dem Einbringen in das Fließpresswerkzeug erwärmt wird, ist das Fließpresswerkzeug selbst bevorzugt mit Temperierungseinrichtungen ausgestattet. Mit deren Hilfe kann beispielsweise das Matrixmaterial kontrolliert abgekühlt werden. In einem möglichen Verfahren kann die Temperatur des Fließpresswerkzeuges auf etwa 50°C bis 60°C eingestellt und dort gehalten werden.

In dem Fließpressvorgang wird die erste Lage zu der Unterschale umgeformt und die zweite Lage zu der Rippenstruktur umgeformt. Dabei werden Unterschale und Rippenstruktur einstückig ausgebildet. Die Umformung findet in einem Fließpresswerkzeug statt, das mit den entsprechenden Formhohlräumen für die Rippenstruktur ausgestattet ist. Es wird hier nochmals deutlich, dass die zweite Lage aus zumindest einer Platte zweiter Art ebenfalls je nach Materialbedarf und der Endgestalt der Rippenstruktur maßgeschneidert werden kann. Es wird gerade so viel Plattenmaterial verwendet, so dass die Rippenstruktur und die Unterschale sauber ausgebildet werden und kein Materialüberschuss vorliegt. Dadurch kann äußerst rationell und wirtschaftlich gearbeitet werden.

Als nächstes werden Unterschale und Rippenstruktur entformt, wobei der Entformungsvorgang nicht lediglich das Herausnehmen von Unterschale und Rippenstruktur aus dem Fließpresswerkzeug beinhaltet, sondern auch das Abkühlen des umgeformten Halbzeugs und dessen Aushärten.

Schließlich werden die einzelnen Bestandteile Oberschale und Unterschale mit der Rippenstruktur zu einem Achsträger zusammengefügt. Hier kommen alle denkbaren Fügeverfahren zum Einsatz. Die Verbindung zwischen den einzelnen Bestandteilen kann stoffschlüssig, formschlüssig oder mechanisch durch Clinchen, Nieten oder Schrauben vollzogen werden.

Die Unterschale und die daraus einstückig ausgebildete Rippenstruktur kann durch die Zusammenstellung des Lagenstapels maßgeschneidert angepasst werden. In einer bevorzugten Ausführungsform der Erfindung ist die zumindest eine Platte zweiter Art abhängig vom Materialbedarf für die Rippenstruktur dimensioniert und/oder auf der ersten Lage angeordnet. Die zumindest eine Platte zweiter Art kann also viel kleiner in ihrer Dimensionierung sein als die Platten erster Art, die die erste Lage bilden. Insbesondere werden die Platten zweiter Art dort angeordnet, wo später die Rippenstruktur auf der Unterschale ausgebildet sein soll. Dies kann beispielsweise einzelne kleine Stapel von Platten zweiter Art betreffen oder auch einzelne Platten zweiter Art, die beabstandet zueinander auf der ersten Lage angeordnet sind.

In einer bevorzugten Ausführungsform überdeckt die zweite Lage die erste Lage folglich nur bereichsweise.

Auch die erste Lage weist eine große Gestaltungsvariabilität je nach vorgesehener Konstruktion auf. Je nachdem, wie die Unterschale gestaltet sein soll, kann die erste Lage aus mehreren unterschiedlichen Platten erster Art zusammengestellt sein. So sieht eine besondere Ausführungsform der Erfindung vor, dass die erste Lage aus mehreren unterschiedlich großen Platten erster Art besteht und dass diese Platten so angeordnet werden, dass beim Formen der Unterschale lokal unterschiedliche Schalendicken erzeugt werden.

Dies bedeutet nun nicht unbedingt, dass die einzelnen Platten erster Art übereinander gestapelt angeordnet werden können, so dass aufgrund der unterschiedlich großen flächigen Ausdehnungen der einzelnen Platten erster Art eine lokal unterschiedliche Schalendicke erzeugt wird. Es kann vielmehr auch vorgesehen sein, dass unterschiedlich dicke Platten erster Art nebeneinander angeordnet werden und so beim Formen der Unterschale lokal unterschiedliche Schalendicken erzeugt werden.

Es kann weiterhin bevorzugt vorgesehen sein, dass zumindest eine Platte erster Art der ersten Lage vor oder nach dem Stapeln mit einer Ausnehmung versehen wird. Diese Ausgestaltung der Erfindung trägt dem Gedanken der Gewichtseinsparung weiter Rechnung. Es kann der Fall sein, dass in bestimmten Bereichen der Unterschale überhaupt kein Materialbedarf vorliegt, so dass die Unterschale mit einer Ausnehmung an dieser Stelle versehen werden kann. Nun kann beispielsweise eine oder mehrere Platten erster Art bereits vor dem Bilden der ersten Lage beschnitten werden oder es kann eine Ausnehmung eingestanzt werden oder eingefräst werden oder eine andere spanende oder schneidende Bearbeitung angewendet werden, um eine Ausnehmung zu erzeugen. Im Gegensatz dazu können auch mehrere Platten erster Art zunächst aufeinander gestapelt werden und dann gleichzeitig mithilfe mechanischer Bearbeitung mit einer Ausnehmung versehen werden.

Das ausgeschnittene oder ausgestanzte Material kann wieder recycelt werden und erneut dem Produktionsprozess zugeführt werden. Dadurch wird die Abfallmenge äußerst vorteilhaft minimiert, was insbesondere wegen der teureren Materialien mit einer erheblichen Kosteneinsparung verbunden ist.

Weiterhin sieht eine bevorzugte Ausgestaltung der Erfindung vor, dass das Fließpresswerkzeug ein Ober- und ein Unterwerkzeug umfasst, wobei die für die Formung der Rippenstruktur vorgesehenen Formhohlräume im Unterwerkzeug vorliegen und beim Fließpressvorgang die aufgeschmolzene Matrix der Platte zweiter Art unterstützt durch die Schwerkraft in diese Formhohlräume fließt. Die flüssige thermoplastische Matrix ist niedrigviskos, so dass sie problemlos in die Formhohlräume einfließen kann, noch bevor der eigentliche Pressvorgang beginnt. Dadurch wird das Fließpressen unterstützt und vereinfacht.

In einer weiteren Ausgestaltung der Erfindung sind in der Unterschale Anbindungsstellen angeformt und werden in einem zusätzlichen Verfahrensschritt mit metallischen Verstärkungselementen versehen. Bei diesen Verstärkungselementen kann es sich beispielsweise um metallische Anbindungshülsen oder Einleger handeln. Die Verstärkungselemente können dabei in bereits vorgesehene und vorgeformte Hohlräume eingelegt oder eingepresst werden. Es ist aber auch möglich, durch eine nachfolgende spanende Bearbeitung diese Hohlräume für die Verstärkungselemente erst zu erzeugen. Es kann auch vorgesehen sein, dass die Verstärkungselemente selbst beispielsweise in das Kunststoffmaterial eingedreht werden oder schneidend die Aufnahmehohlräume erst schaffen.

Zwar ist die eigentliche Funktion der Unterschale und der Rippenstruktur die Aussteifung und Verstärkung der Oberschale, auf der anderen Seite ist aber gerade der Kunststoff in dem Fließpressverfahren besonders gut formbar, so dass auch komplexere Anbindungsstellen hergestellt werden können, als dies bei der Umformung des metallischen Materials der Oberschale möglich ist.

Es kann in diesem Zusammenhang auch vorgesehen sein, dass durch die Anbindungsstellen für Fahrwerksteile an der Unterschale korrespondierende Anbindungsstellen für Fahrwerksteile an der Oberschale unterstützt werden. Beispielsweise dass Löcher in der Oberschale fluchtend mit einem Sackloch in der Unterschale oder in der Rippenstruktur angeordnet sind und durch beide gemeinsam eine Anschraubhülse hindurch gesteckt wird.

Weitere Merkmale und Vorteile der Erfindung ergeben sich aus den Zeichnungen und der dazugehörigen Beschreibung.

Die Zeichnungen zeigen ein bevorzugtes Ausführungsbeispiel und werden in der Figurenbeschreibung näher erläutert. Dabei beziehen sich gleiche Bezugszeichen auf gleiche oder ähnliche oder funktional gleiche Bauteile.

Es zeigen:
- Figur 1: einen erfindungsgemäßen Achsträger im Zusammenbau;
- Figur 2: die Oberschale des Achsträgers in einer Einzeldarstellung von oben;
- Figur 3: die Oberschale des Achsträgers von unten mit Anbindungshülsen;
- Figur 4: die Unterschale mit der Rippenstruktur;
- Figur 5: einen Querschnitt entlang der Linie A-A gemäß Figur 1 des erfindungsgemäßen Achsträgers;
- Figur 6: einen Längsschnitt entlang der Linie B-B gemäß Figur 1 des erfindungsgemäßen Achsträgers;
- Figur 7a bis g: verschiedene Varianten eines Lagenstapels aus faserverstärktem thermoplastischen Kunststoff und
- Figur 8a bis e: eine Variante des erfindungsgemäßen Herstellungsverfahrens für einen Achsträger, bei dem die Unterschale aus einem Lagenstapel gemäß der Variante der Figur 7a hergestellt wird.

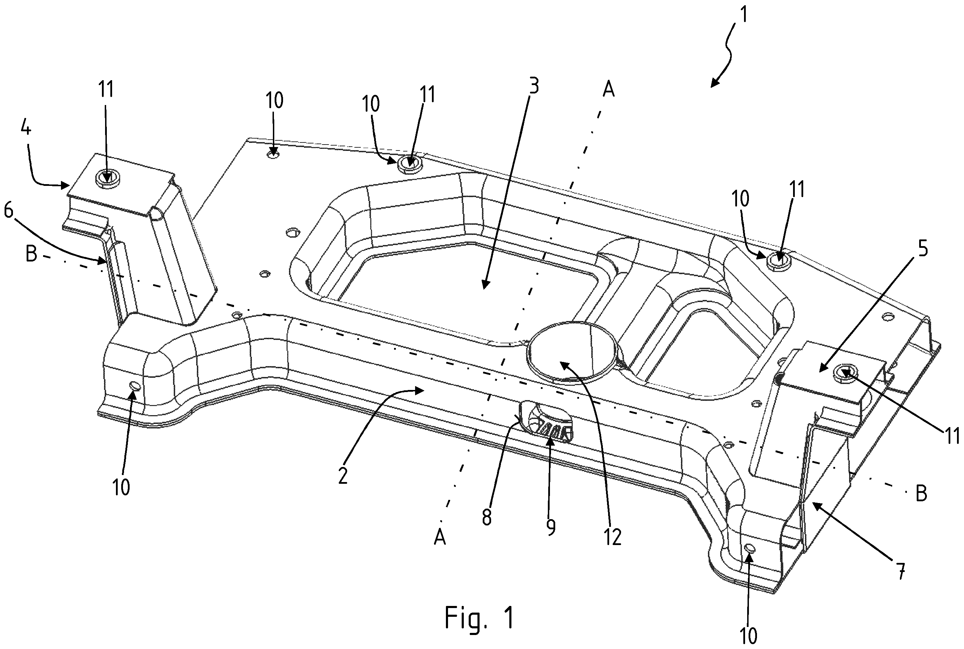

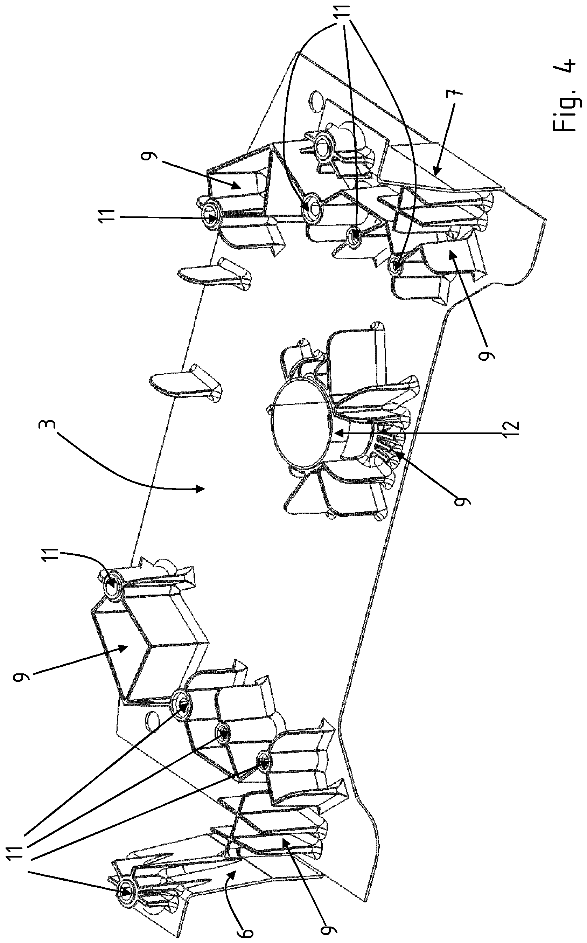

Eine Ausführung eines erfindungsgemäßen Achsträgers 1 im Zusammenbau zeigt die Figur 1. Der Achsträger 1 umfasst eine Oberschale 2, eine Unterschale 3 sowie eine Rippenstruktur 9 zur Aussteifung der Oberschale 2. Die Rippenstruktur 9 ist in der Figur 1 lediglich durch die Öffnung 8 hindurch zu erkennen, da sie sich ansonsten vollständig in der geschlossenen Hülle des Achsträgers 1 befindet. Eine deutlichere Darstellung der Rippenstruktur 9 befindet sich in Figur 4. Die Oberschale 2 ist in diesem Ausführungsbeispiel aus einer Aluminiumlegierung hergestellt. Die Unterschale 3 besteht aus einem faserverstärkten Kunststoff, wobei die Faserverstärkung sowohl Langfasern als auch Kurzfasern beinhaltet. Die Rippenstruktur 9 ist einstückig aus der Unterschale 3 ausgebildet und besteht aus einem kurzfaserverstärkten Kunststoff. Die Fasern haben hierbei eine Länge von bis zu zehn Zentimetern.

An der Oberschale 2 sind weiterhin zwei Anbindungstürme 4, 5 angebracht. Diese dienen der Anbindung des Achsträgers 1 an die Fahrzeugkarosserie. Aus der Unterschale 3 sind Versteifungsabschnitte 6, 7 ausgebildet, die in die Anbindungstürme 4, 5 hineinragen. Die Unterschale 3 selbst ist als ebene Fläche ohne Ausnehmungen ausgebildet und schließt die Oberschale 2 von unten vollflächig ab. Die Versteifungsabschnitte 6, 7 sind gegenüber der flächigen Ebene der Unterschale 3 nach oben, also zur Oberschale hinweisend, abgewinkelt und schließen ihrerseits die Anbindungstürme 4, 5 ab. Die Anbindungstürme 4, 5 sind als separate Bauteile hergestellt und stoffschlüssig mit der Oberschale 2 verbunden. Sie bilden besonders ausgestaltete Anbindungsstellen für andere Fahrwerksteile und sind zu diesem Zweck mit Anbindungshülsen 11 versehen. Andere Anbindungsstellen 10 für andere Fahrwerksteile, wie beispielsweise Stabilisator oder Lenker, sind zur Verstärkung teilweise ebenfalls mit Anbindungshülsen 11 versehen.

Eine weitere besonders ausgebildete Anbindungsstelle stellt das Lager 12 dar. Dieses dient der Anbindung einer Drehmomentstütze des Motorblocks und damit der Abstützung der Drehmomente des Motorblocks.

Die hier gezeigte Oberschale 2 sowie die Anbindungstürme 4, 5 weisen Blechdicken von 2 mm bis 2,5 mm auf. Die Unterschale 3 sowie die Rippenstruktur 9 weist Wandstärken um die 4 mm auf. Würde der gesamte Achsträger 1 vollständig aus Aluminium gefertigt werden, wären die Blechdicken für die Oberschale 2 sowie Anbindungstürme 4, 5 im Bereich zwischen 2 mm und 4,5 mm zu konstruieren. Eine entsprechende Unterschale 3 würde eine Wandstärke von etwa 3 mm aufweisen. Die Wandstärken wären dementsprechend für die metallischen Bauteile höher. In Kombination mit der geringeren Dichte des faserverstärkten Kunststoffes gegenüber der von Aluminium bzw. einer Aluminiumlegierung führt dies zu einer Gesamtgewichtsersparnis von rund 17 % durch den Einsatz unterschiedlicher Materialien, die angepasst an die Anforderungen ausgewählt werden.

Die Oberschale 2 übernimmt hierbei im Wesentlichen die Aufgabe der Konturgebung. Außerdem werden weitere Fahrwerksteile, über die Kräfte in den Achsträger 1 eingeleitet werden, wie beispielsweise Stabilisatoren oder Lenker, direkt an der Oberschale 2 befestigt. Die Unterschale 3 bzw. die Rippenstruktur 9 dient der Versteifung der Oberschale 2. In die Unterschale 3 kann auch eine Funktion als Schubfeld integriert werden.

Die hier gezeigte Ausgestaltung mit der Unterschale 3 als vollflächiges Bauteil, das die Oberschale 2 nach unten abschließt, wirkt zusätzlich als Korrosionsschutz und als Schutz vor Steinschlägen.

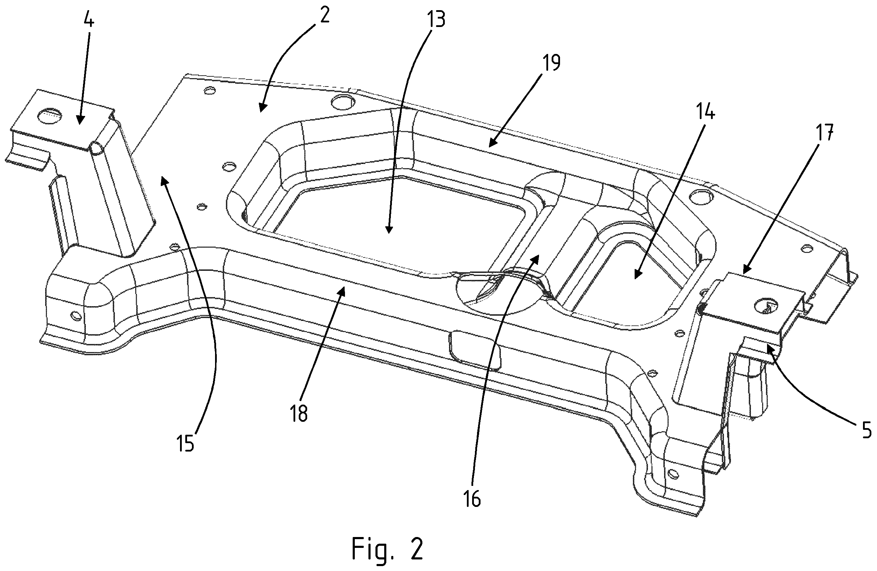

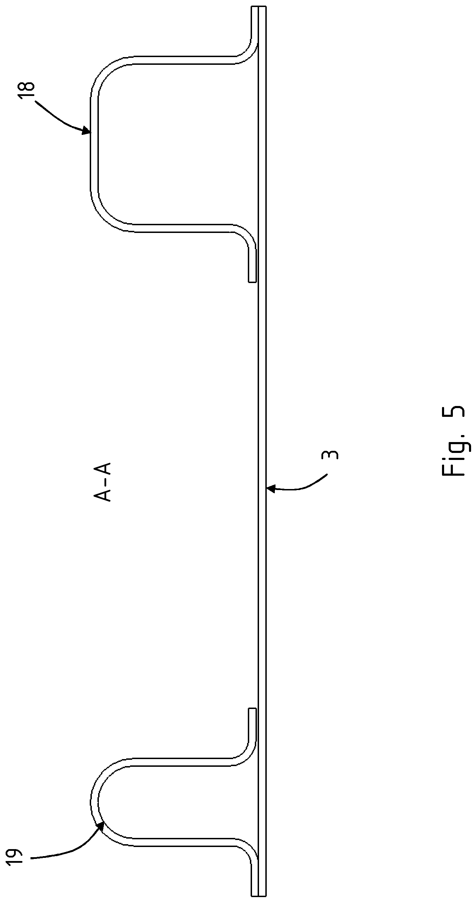

Die Oberschale 2 ist in Figur 2 in einer Einzeldarstellung gezeigt. Wie bereits erwähnt, sind die Anbindungstürme 4, 5 als separate Bauteile ausgebildet und stoffschlüssig mit der Oberschale 2 verbunden. Die Oberschale 2 selbst weist Längsstreben 15, 16, 17 auf, die über Querstreben 18, 19 miteinander verbunden sind. Zwischen den Längsstreben 15, 16, 17 und Querstreben 18, 19 befinden sich Ausnehmungen 13, 14. Durch diese Ausnehmungen 13, 14 ist eine zusätzliche Gewichtseinsparung möglich. Die Längsstreben 15, 16, 17 und die Querstreben 18, 19 weisen jeweils einen im Wesentlichen U-förmigen Querschnitt auf, wie es in Figur 5 deutlich wird. Figur 5 zeigt einen Schnitt durch einen erfindungsgemäßen Achsträger 1 entlang der Schnittlinie A-A in Figur 1. In Figur 5 ist die U-förmige Querstrebe 19 zu sehen, wohingegen der Querschnitt der Querstrebe 18 eher eine Hutform aufweist. Dort wird noch einmal deutlich, dass die Unterschale 3 eine vollflächige Struktur aus Faserverbundwerkstoff ist, die die Oberschale 2 vollständig abschließt. Die Längsstreben 15, 17 sind so gestaltet, dass eine Wand des U-förmigen Querschnitts herausgeschnitten ist. Auch dies dient der Vermeidung überflüssigen Gewichts.

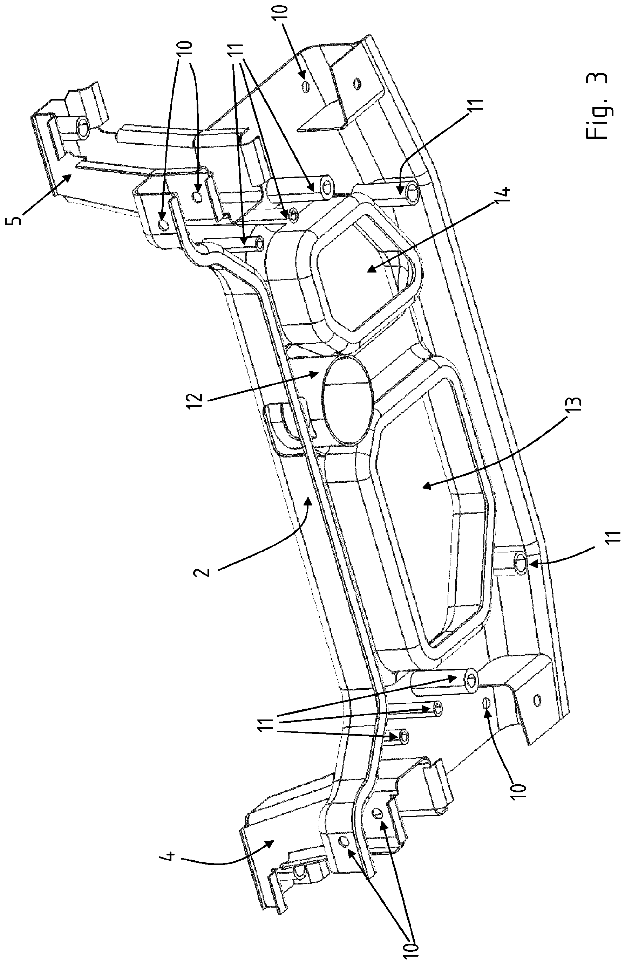

Die Oberschale 2 wird in Figur 3 aus einem Blickwinkel von unten gezeigt. Dies verdeutlicht noch einmal den Einsatz von Anbindungshülsen 11 zur Verstärkung der Anbindungsstellen 10.

In Figur 4 ist die Unterschale 3 zusammen mit der Rippenstruktur 9 als separates einstückiges Bauteil abgebildet. Zur Verdeutlichung sind hier ebenfalls die Anbindungshülsen 11 eingeblendet. Die Darstellung macht deutlich, dass die Rippenstruktur 9 in erster Linie in der Nähe der Anbindungsstellen 10, die durch die Anbindungshülsen 11 verstärkt werden, ausgebildet sind. An den Anbindungsstellen 10 sind die Fahrwerksbauteile befestigt, über die Kräfte in den Achsträger 1 eingeleitet werden. Diese Stellen des Achsträgers 1 sind daher besonders stark dynamisch belastet und bedürfen einer zusätzlichen Verstärkung. Daher ist die aussteifende Rippenstruktur 9 insbesondere im Bereich der Anbindungsstellen 10 vorgesehen. Dies ist wiederum im Einklang mit dem Ziel der Gewichtseinsparung und daraus folgend dem konsequenten Materialeinsatz an den notwendigen Stellen. Es ist mithin nicht notwendig, dass sämtliche Hohlräume der Oberschale 2 durch die Rippenstruktur 9 ausgefüllt und/oder versteift werden. Insbesondere das relativ kostspielige Faserverbundmaterial wird hier gezielt nach Bedarf eingesetzt.

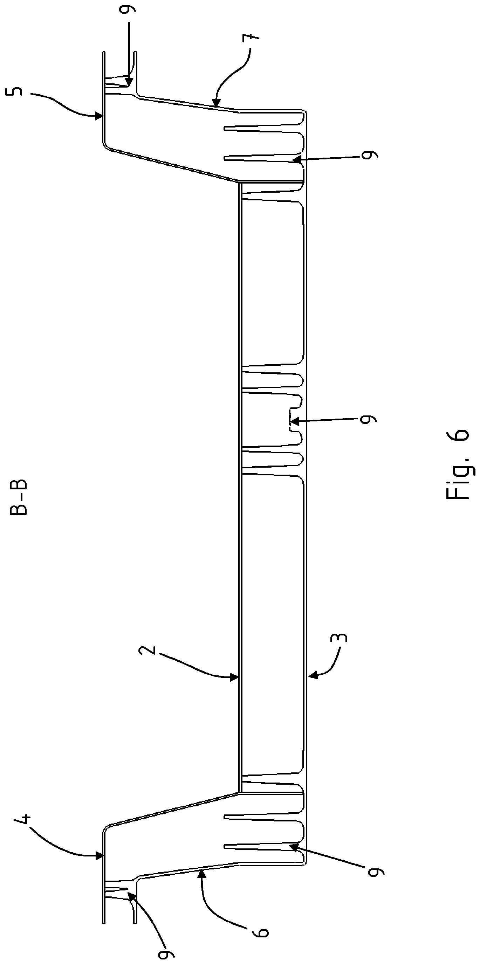

Einen weiteren Querschnitt entlang der Linie B-B in Figur 1 zeigt die Figur 6. Der Schnitt führt durch die beiden Anbindungstürme 4, 5 sowie durch die Oberschale 2 und die Unterschale 3. Diese Darstellung macht zweierlei deutlich. Zum einen ist hier gut zu sehen, dass die Rippenstruktur 9 einstückig aus der Unterschale 3 ausgebildet ist. Zum anderen kommt wiederum der Einsatz der Rippenstruktur 9 an den notwendigen Stellen deutlich zum Ausdruck. Insbesondere die Verstärkung der Anbindungstürme 4, 5 durch die Versteifungsabschnitte 6, 7 ist hier gut zu erkennen.

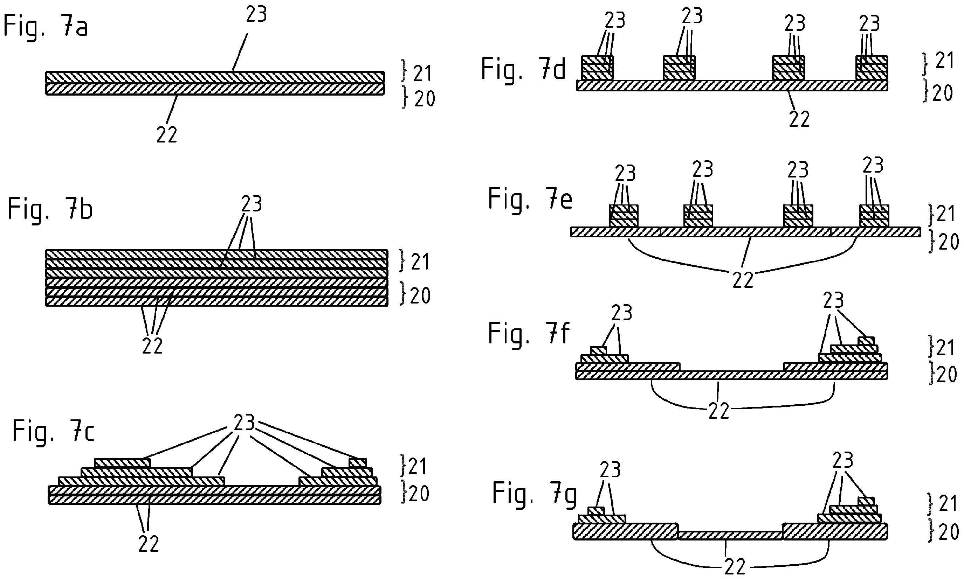

Hergestellt wird die Unterschale 3 aus einem Stapel aus Lagen eines faserverstärkten thermoplastischen Kunststoffes, wobei eine erste Lage 20 aus zumindest einer Platte erster Art 22 mit Fasern in Form von Geweben und/oder Gelegen und/oder Kurzfasern besteht und eine zweite Lage 21 aus zumindest einer Platte zweiter Art 23 mit Fasern in Form von Kurzfasern besteht. Die erste Lage 20 wird beim Fließpressen zur Unterschale 3 umgeformt, wohingegen die zweite Lage 21 zu der Rippenstruktur 9 umgeformt wird. Um das Fasermaterial zielgerichtet einsetzen zu können, wird der Lagenstapel je nach Ausgestaltung der Unterschale 3 und der Rippenstruktur 9 maßgeschneidert hergestellt. Dabei ergeben sich viele verschiedene Ausführungsvarianten. Exemplarisch sind in den Figuren 7a bis 7g unterschiedliche Varianten eines erfindungsgemäßen Lagenstapels vorgestellt. Diese Aufzählung ist allerdings bei weitem nicht abschließend, sondern soll nur die Variabilität des Verfahrens deutlich machen. Allen vorgestellten Lagenstapeln ist gemein, dass sie aus einer ersten Lage 20 und einer zweiten Lage 21 bestehen. Die erste Lage 20 besteht jeweils aus zumindest einer Platte erster Art 22 und die zweite Lage 21 besteht zumindest aus einer Platte zweiter Art 23. Auch wenn in den einzelnen Figuren 7a bis 7g die Platten erster Art und zweiter Art 22, 23 in unterschiedlichen Größen und Stückzahlen gezeigt werden, werden keine unterschiedlichen Bezugszeichen verwendet.

Die einfachste Form eines erfindungsgemäßen Lagenstapels zeigt die Figur 7a. Hier besteht die erste Lage 20 lediglich aus einer Platte erster Art 22 und die zweite Lage 21 lediglich aus einer Platte zweiter Art 23.

In Figur 7b bestehen die erste Lage 20 und die zweite Lage 21 jeweils aus einer Mehrzahl von Platten erster Art 22 bzw. zweiter Art 23. Insbesondere wenn in der Platte erster Art 22 unidirektionale Materialien, wie etwa Gewebe oder Gelege, die Faserverstärkung bilden, können Platten 22 mit unterschiedlicher Ausrichtung dieser Fasermaterialien aufeinander gestapelt werden. Dadurch ist es durch die unterschiedlichen Vorzugsrichtungen der Platten erster Art 20 möglich, eine zusätzliche Variabilität hinsichtlich der Materialeigenschaften einzuführen.

Wie in den Figuren 1 bis 6 dargestellt, ist es aber gelegentlich nicht notwendig, die Rippenstrukturen 9 vollflächig über die gesamte Unterschale 3 hinweg auszubilden. Es ist vielmehr sinnvoll, das Kurzfaserkunststoffmaterial für die Rippenstruktur 9 zielgerichtet einzusetzen und bereits vor der Umformung so anzuordnen, dass die Rippenstrukturen 9 möglichst einfach erzeugt werden können. Ein Beispiel dafür ist in Figur 7c dargestellt. Hier wird die erste Lage 20 durch zwei Platten erster Art 22 gebildet. Die zweite Lage 21 besteht ebenfalls aus mehreren Platten zweiter Art 23, die zwar alle die gleiche Dicke aufweisen, aber in ihren Flächendimensionen unterschiedlich groß gestaltet sind. Die Platten zweiter Art 23 sind hier abhängig vom Materialbedarf für die Rippenstruktur 9 dimensioniert und auf der ersten Lage 20 angeordnet. Dabei bedeckt die zweite Lage 21 die erste Lage 20 nur bereichsweise.

Eine ähnliche Ausgestaltung wie Figur 7c zeigt die Figur 7d. Hier besteht die erste Lage 20 aus nur einer Platte erster Art 22, die aber eine größere Dicke aufweist als beispielsweise die Platten erster Art 22 in Figur 7c. Die Platten zweiter Art 23 sind wiederum lokal dort auf der ersten Lage 20 angeordnet, wo später die Rippenstruktur 9 ausgeformt werden soll.

Es ist nicht zwingend vorgesehen, dass die Platten erster Art 22 und die Platten zweiter Art 23 innerhalb der ersten Lage 20 oder der zweiten Lage 21 übereinander angeordnet sein müssen. Vielmehr ist es auch möglich, die einzelnen Platten erster Art 22 oder zweiter Art 23 nebeneinander anzuordnen, wie beispielsweise in Figur 7e gezeigt. Hier besteht die erste Lage 20 aus drei nebeneinander angeordnete Platten erster Art.

Um die Unterschale 3 auf die zu erwartenden Belastungen oder konstruktiven Vorgaben anzupassen, kann vorgesehen sein, dass die Unterschale 3 eine lokal unterschiedliche Schalendicke aufweist. Dies kann bei der Herstellung des Lagenstapels in zweierlei Hinsicht berücksichtigt werden. In Figur 7f besteht die erste Lage 20 aus einer Platte erster Art 22, die eine großflächige Grundplatte bildet. Darauf sind mehrere kleiner dimensionierte Platten erster Art 22 angeordnet. Genau an den Stellen, an denen die Unterschale 3 später eine lokal höhere Schalendicke aufweisen soll.

Derselbe Effekt ist erzielbar, wenn mehrere Platten erster Art 22 mit unterschiedlicher Dicke nebeneinander angeordnet werden, wie es in Figur 7g gezeigt ist.

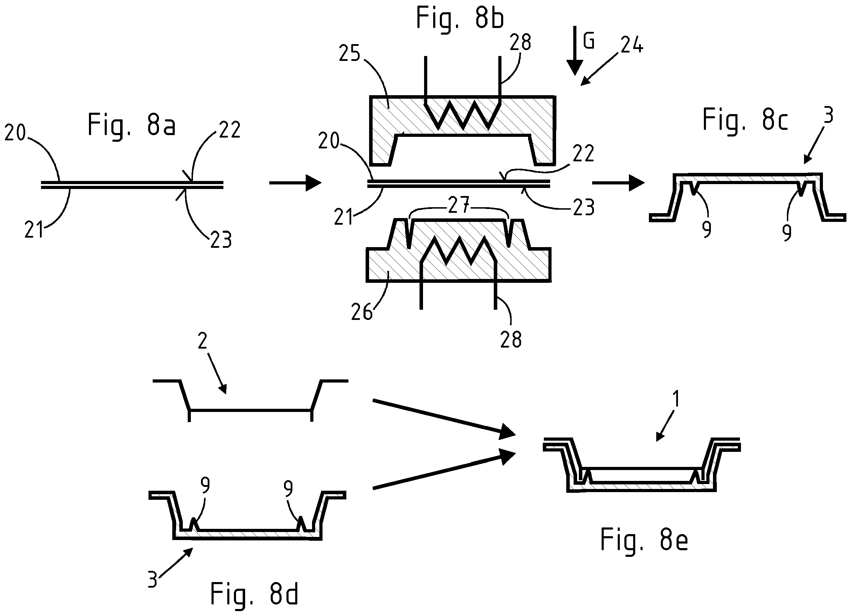

Die Figuren 8a bis 8e zeigen schematisch ein erfindungsgemäßes Herstellungsverfahren für einen Achsträger 1. Die Unterschale 3 sowie die Rippenstruktur 9 werden in der gezeigten Variante aus zwei Lagen 20, 21 hergestellt, wobei die erste Lage 20 aus einer Platte erster Art 22 und die zweite Lage 21 aus einer Platte zweiter Art 23 besteht. Die gezeigten Lagen 20, 21 sind entsprechend der Ausgestaltung gemäß Figur 7a. In der gezeigten Variante des erfindungsgemäßen Herstellungsverfahrens werden die beiden Lagen 20, 21 gemeinsam in das Fließpresswerkzeug 24 eingebracht und dort auf eine Temperatur erwärmt, welche größer ist, als die Schmelztemperatur der thermoplastischen Matrix. Anschließend werden die beiden Lagen 20, 21 in einem Fließpressvorgang umgeformt und verschmolzen. Hierbei bildet die erste Lage 20 die Unterschale 3 und die zweite Lage 21 die Rippenstruktur 9 aus, wobei die Unterschale 3 und die Rippenstruktur 9 durch den Fließpressvorgang einstückig ausgebildet werden.

Figur 8b zeigt, dass das Fließpresswerkzeug 24 aus einem Oberwerkzeug 25 und einem Unterwerkzeug 26 besteht. Sowohl das Oberwerkzeug 25 als auch das Unterwerkzeug 26 weisen in der gezeigten Ausgestaltung eine Erwärmungsvorrichtung 28 auf, um die beiden Lagen 20, 21 zu erwärmen. In nicht gezeigten Ausgestaltungen kann die Erwärmung der Lagen 20, 21 auch vor dem oder während des Einführens in das Fließpresswerkzeug 24 durch externe Erwärmungsvorrichtungen erfolgen. In der gezeigten Variante des erfindungsgemäßen Herstellungsverfahrens weist das Unterwerkzeug 26 Formhohlräume 27 auf, um die Rippenstruktur 9 zu formen. Durch das Erwärmen des Stapels auf die Temperatur schmilzt die Matrix der Platte zweiter Art 23, welche aus Kurzfasern besteht, und fließt während des Pressens in die Formhohlräume 27, so dass während der Umformung die Rippenstruktur 9 entsteht. In der gezeigten Ausgestaltung des erfindungsgemäßen Verfahrens wird die Ausbildung der Rippenstruktur 9 durch die Schwerkraft G unterstützt.

Anschließend kann die Unterschale 3 mit der einstückig ausgebildeten Rippenstruktur 9 aus dem Fließpresswerkzeug 24 entnommen worden. Dies zeigt Figur 8c. Figur 8d und 8e zeigen, dass eine separat bereitgestellte Oberschale 2, die Unterschale 3 und die Rippenstruktur 9 zum Achsträger 1 gefügt werden. Das Fügen kann durch eine stoffschlüssige, formschlüssige oder mechanische Verbindung, insbesondere durch Clinchen, Nieten oder Schrauben, hergestellt werden.

In weiteren, nicht gezeigten Varianten des erfindungsgemäßen Verfahrens ist es vorgesehen, dass zur Herstellung des Achsträgers 1 ein Stapel aus Lagen verwendet wird, welche gemäß den Figur 7b bis 7g gezeigt sind. Insbesondere wird eine erste Lage 20 sowie eine zweite Lage 21 mit unterschiedlichen Ausgestaltungen verwendet. Zur Vermeidung unnötiger Wiederholungen wird auf die Beschreibung zu den Figuren 7b bis 7g verwiesen.

Gemäß einer weiteren, nicht gezeigten Ausführungsvariante des erfindungsgemäßen Verfahrens ist es zudem möglich, dass das Unterwerkzeug 26 weitere Formhohlräume 27 aufweist, die die Erstellung einer komplexeren Rippenstruktur 9 ermöglichen. Solch komplexe Rippenstrukturen 9 werden in den Figuren 4 und 6 gezeigt.

### Bezugszeichen:

- 1 -: Achsträger
- 2 -: Oberschale
- 3 -: Unterschale
- 4 -: Anbindungsturm
- 5 -: Anbindungsturm
- 6 -: Versteifungsabschnitt
- 7 -: Versteifungsabschnitt
- 8 -: Öffnung
- 9 -: Rippenstruktur
- 10 -: Anbindungsstelle
- 11 -: Anbindungshülse
- 12 -: Lager
- 13 -: Ausnehmung
- 14 -: Ausnehmung
- 15 -: Längsstrebe
- 16 -: Längsstrebe
- 17-: Längsstrebe
- 18 -: Querstrebe
- 19 -: Querstrebe
- 20 -: erste Lage
- 21 -: zweite Lage
- 22 -: Platte erster Art
- 23 -: Platte zweiter Art
- 24 -: Fließpresswerkzeug
- 25 -: Oberwerkzeug
- 26 -: Unterwerkzeug
- 27 -: Formhohlraum
- 28 -: Erwärmungsvorrichtung

- G -: Schwerkraft

## Patentansprüche

1. Achsträger (1) für ein Kraftfahrzeug, umfassend eine Oberschale (2), eine Unterschale (3) aus einem faserverstärkten Kunststoff sowie eine Rippenstruktur (9) zur Aussteifung der Oberschale (2), **dadurch gekennzeichnet, dass** die Oberschale (2) aus einem metallischen Material besteht und die Rippenstruktur (9) aus einem kurzfaserverstärkten Kunststoff besteht und einstückig aus der Unterschale (3) ausgebildet ist.

2. Achsträger nach Anspruch 1, **dadurch gekennzeichnet, dass** die Oberschale (2) Anbindungsstellen (10) für Fahrzeugteile aufweist, wobei mindestens zwei der Anbindungsstellen als Anbindungstürme (4, 5) ausgebildet sind, die insbesondere als separate Bauteile ausgebildet sind.

3. Achsträger nach Anspruch 2, **dadurch gekennzeichnet, dass** die Unterschale (3) Versteifungsabschnitte (6, 7) aufweist, die zumindest bereichsweise in die Anbindungstürme (4, 5) hineinragen.

4. Achsträger nach einem oder mehreren der vorstehenden Ansprüche, **dadurch gekennzeichnet, dass** die Rippenstruktur (9) im Bereich der Anbindungsstellen (10) ausgebildet ist.

5. Achsträger nach einem oder mehreren der vorstehenden Ansprüche, **dadurch gekennzeichnet, dass** die Unterschale (3) eine lokal unterschiedliche Schalendicke aufweist.

6. Achsträger nach einem oder mehreren der vorstehenden Ansprüche, **dadurch gekennzeichnet, dass** die Unterschale (3) Ausnehmungen aufweist.

7. Achsträger nach einem oder mehreren der vorstehenden Ansprüche, **dadurch gekennzeichnet, dass** die Oberschale (2) zumindest zwei Längsstreben (15, 16, 17) und zumindest eine die Längsstreben (15, 16, 17) verbindende Querstrebe (18, 19) aufweist.

8. Achsträger nach Anspruch 7, **dadurch gekennzeichnet, dass** die Längsstreben (15, 16, 17) und die zumindest eine Querstrebe (18, 19) einen U-förmigen oder V-förmigen oder hutförmigen Querschnitt aufweisen.

9. Achsträger nach einem oder mehreren der vorstehenden Ansprüche, **dadurch gekennzeichnet, dass** es sich bei der Faserverstärkung der Unterschale (3) um ein Gewebe oder ein Gelege handelt.

10. Achsträger nach einem oder mehreren der vorstehenden Ansprüche, **dadurch gekennzeichnet, dass** die Unterschale (3) Anbindungsstellen für Fahrwerksteile aufweist, die insbesondere mit metallischen Verstärkungselementen versehen sind.

11. Achsträger nach einem oder mehreren der vorstehenden Ansprüche, **dadurch gekennzeichnet, dass** die Oberschale (2) aus einem Leichtmetall, insbesondere aus Aluminium, besteht.

12. Verfahren zur Herstellung des Achsträgers (1) aus einer Oberschale (2) und einer Unterschale (3) aus einem faserverstärkten Kunststoff sowie einer Rippenstruktur (9) zur Aussteifung der Oberschale (2) mit folgenden Verfahrensschritten:
• Bereitstellen einer Oberschale (2) aus einem metallischen Material,
• Bereitstellen eines Stapels aus Lagen eines faserverstärkten Kunststoffes mit einer thermoplastischen Matrix, wobei eine erste Lage (20) aus zumindest einer Platte erster Art (22) mit Fasern in Form von Geweben und/oder Gelegen und/oder Kurzfasern besteht und eine zweite Lage (21) aus zumindest einer Platte zweiter Art (23) mit Fasern in Form von Kurzfasern besteht,
• Erwärmen des Stapels auf eine Temperatur, die größer ist als die Schmelztemperatur der thermoplastischen Matrix, vor, während oder nach dem Einbringen des Stapels in ein Fließpresswerkzeug (24),
• Umformen des Stapels in einem Fließpressvorgang, so dass die erste Lage (20) zu der Unterschale (3) umgeformt wird und die zweite Lage (21) zu der Rippenstruktur (9) umgeformt wird, wobei Unterschale (3) und Rippenstruktur (9) einstückig ausgebildet werden,
• Entformen von Unterschale (3) und Rippenstruktur (9),
• Fügen von Oberschale (2), Unterschale (3) und Rippenstruktur (9) zum Achsträger (1).

13. Verfahren nach Anspruch 12, **dadurch gekennzeichnet, dass** die zumindest eine Platte zweiter Art (23) abhängig vom Materialbedarf für die Rippenstruktur (9) dimensioniert und/oder auf der ersten Lage (20) angeordnet wird.

14. Verfahren nach Anspruch 12 oder 13, **dadurch gekennzeichnet, dass** beim Stapeln der Lagen die erste Lage (20) nur bereichsweise durch die zweite Lage (21) überdeckt wird.

15. Verfahren nach einem oder mehreren der Ansprüche 12 bis 14, **dadurch gekennzeichnet, dass** die erste Lage (20) aus mehreren unterschiedlich großen Platten erster Art (22) besteht und diese Platten (22) so angeordnet werden, dass beim Formen der Unterschale (3) lokal unterschiedliche Schalendicken erzeugt werden.

16. Verfahren nach einem oder mehreren der Ansprüche 12 bis 15, **dadurch gekennzeichnet, dass** die zumindest eine Platte erster Art (21) der ersten Lage (20) vor oder nach dem Stapeln mit einer Ausnehmung versehen wird.

17. Verfahren nach einem oder mehreren der Ansprüche 12 bis 16, **dadurch gekennzeichnet, dass** das Fließpresswerkzeug (24) ein Ober- und ein Unterwerkzeug (25, 26) umfasst, wobei die für die Formen der Rippenstruktur (9) vorgesehenen Formhohlräume (27) im Unterwerkzeug (26) vorliegen und beim Fließpressvorgang die aufgeschmolzene Matrix der Platte zweiter Art (23) unterstützt durch die Schwerkraft (G) in diese Formhohlräume (27) fließt.

18. Verfahren nach einem oder mehreren der Ansprüche 12 bis 17, **dadurch gekennzeichnet, dass** in der Unterschale (3) Anbindungsstellen angeformt und in einem zusätzlichen Verfahrensschritt mit metallischen Verstärkungselementen versehen werden.

## Claims

1. Subframe (1) for a motor vehicle, comprising an upper shell (2), a lower shell (3) made from a fibre-reinforced plastic and a rib structure (9) for stiffening the upper shell (2), **characterised in that** the upper shell (2) is composed of a metallic material and the rib structure (9) is composed of a plastic reinforced with short fibres and is formed integrally from the lower shell (3).

2. Subframe according to claim 1, **characterised in that** the upper shell (2) has attachment points (10) for vehicle parts, wherein at least two of the attachment points are designed as attachment towers (4, 5), which, in particular, are designed as separate components.

3. Subframe according to claim 2, **characterised in that** the lower shell (3) has stiffening sections (6, 7), which project into the attachment towers (4, 5) at least in some region or regions.

4. Subframe according to one or more of the preceding claims, **characterised in that** the rib structure (9) is formed in the region of the attachment points (10).

5. Subframe according to one or more of the preceding claims, **characterised in that** the lower shell (3) has a locally different shell thickness.

6. Subframe according to one or more of the preceding claims, **characterised in that** the lower shell (3) has recesses.

7. Subframe according to one or more of the preceding claims, **characterised in that** the upper shell (2) has at least two longitudinal struts (15, 16, 17) and at least one cross-strut (18, 19) connecting the longitudinal struts (15, 16, 17).

8. Subframe according to claim 7, **characterised in that** the longitudinal struts (15, 16, 17) and the at least one cross-strut (18, 19) have a U-shaped or V-shaped or hat-shaped cross section.

9. Subframe according to one or more of the preceding claims, **characterised in that** the fibre reinforcement of the lower shell (3) is a woven fabric or a non-crimp fabric.

10. Subframe according to one or more of the preceding claims, **characterised in that** the lower shell (3) has attachment points for running gear parts, which, in particular, are provided with metallic reinforcing elements.

11. Subframe according to one or more of the preceding claims, **characterised in that** the upper shell (2) is composed of a light metal, in particular of aluminium.

12. Method for producing the subframe (1) comprising an upper shell (2) and a lower shell (3) made from a fibre-reinforced plastic and a rib structure (9) for stiffening the upper shell (2), comprising the following method steps:
• providing an upper shell (2) made from a metallic material,
• providing a stack of plies made from a fibre-reinforced plastic having a thermoplastic matrix, wherein a first ply (20) comprises at least one sheet of a first type (22) containing fibres in the form of woven fibres and/or non-crimp fibres and/or short fibres and a second ply (21) comprises at least one sheet of a second type (23) containing fibres in the form of short fibres,
• heating the stack to a temperature, which is higher than the melting temperature of the thermoplastic matrix before, during or after the introduction of the stack into an impact extrusion tool (24),
• forming the stack in an impact extrusion process, with the result that the first ply (20) is formed into the lower shell (3) and the second ply (21) is formed into the rib structure (9), wherein the lower shell (3) and the rib structure (9) are formed integrally,
• removing the lower shell (3) and the rib structure (9) from the mould,
• joining the upper shell (2), the lower shell (3) and the rib structure (9) to form the subframe (1).

13. Method according to claim 12, **characterised in that** the at least one sheet of the second type (23) is dimensioned and/or arranged on the first ply (20) in accordance with the material requirement for the rib structure (9).

14. Method according to claim 12 or 13, **characterised in that** the first ply (20) is covered only in some region or regions by the second ply (21) during the stacking of the plies.

15. Method according to one or more of claims 12 to 14, **characterised in that** the first ply (20) comprises a plurality of sheets of the first type (22) of different sizes and said sheets (22) are arranged in such a way that locally different shell thicknesses are produced during the moulding of the lower shell (3).

16. Method according to one or more of claims 12 to 15, **characterised in that** the at least one sheet of the first type (21) of the first ply (20) is provided with an aperture before or after stacking.

17. Method according to one or more of claims 12 to 16, **characterised in that** the impact extrusion tool (24) comprises an upper and a lower die (25, 26), wherein the moulding cavities (27) provided for the shapes of the rib structure (9) are in the lower die (26), and the molten matrix of the sheet of the second type (23) flows into said moulding cavities (27) with the assistance of gravity (G) during the impact extrusion process.

18. Method according to one of more of claims 12 to 17, **characterised in that** attachment points are formed integrally in the lower shell (3) and are provided with metallic reinforcement elements in an additional method step.

## Revendications

1. Support d'essieu (1) pour un véhicule automobile comprenant une coque supérieure (2), une coque inférieure (3) en matière plastique renforcée par des fibres ainsi qu'une structure nervurée (9) pour raidir la coque supérieure (2), **caractérisé en ce que** la coque supérieure (2) est formée d'un matériau métallique et la structure nervurée (9) est constituée d'une matière plastique renforcée par des fibres courtes et est formée d'un seul tenant avec la coque inférieure (3).

2. Support d'essieu selon la revendication 1, **caractérisé en ce que** la coque supérieure (2) présente des points de fixation (10) pour des parties du véhicule, dans lequel au moins deux des points de fixation sont conformés en tours de fixation (4, 5) qui se présentent en particulier sous la forme de pièces séparées.

3. Support d'essieu selon la revendication 2, **caractérisé en ce que** la coque inférieure (3) présente des sections de raidissement (6, 7) qui dépassent au moins par zones dans les tours de fixation (4, 5).

4. Support d'essieu selon une ou plusieurs des revendications précédentes, **caractérisé en ce que** la structure nervurée (9) est formée dans la zone des points de fixation (10).

5. Support d'essieu selon une ou plusieurs des revendications précédentes, **caractérisé en ce que** la coque inférieure (3) présente une épaisseur de coque localement différente.

6. Support d'essieu selon une ou plusieurs des revendications précédentes, **caractérisé en ce que** la coque inférieure (3) présente des cavités.

7. Support d'essieu selon une ou plusieurs des revendications précédentes, **caractérisé en ce que** la coque supérieure (2) présente au moins deux tirants longitudinaux (15, 16, 17) et au moins une traverse (18,19) reliant les tirants longitudinaux (15, 16, 17).

8. Support d'essieu selon la revendication 7, **caractérisé en ce que** les tirants longitudinaux (15, 16, 17) et la au moins une traverse (18,19) présentent une section transversale en forme de U ou en forme de V ou en forme de chapeau.

9. Support d'essieu selon une ou plusieurs des revendications précédentes, **caractérisée en ce que** le renforcement fibreux de la coque inférieure (3) est un tissu ou une natte.

10. Support d'essieu selon une ou plusieurs des revendications précédentes, **caractérisé en ce que** la coque inférieure (3) présente des points de fixation pour des pièces de châssis qui sont pourvues en particulier d'éléments de renfort métalliques.

11. Support d'essieu selon une ou plusieurs des revendications précédentes, **caractérisé en ce que** la coque supérieure (2) est constituée d'un métal léger, en particulier d'aluminium.

12. Procédé de fabrication du support d'essieu (1) formé d'une coque supérieure (2) et d'une coque inférieure (3) d'une matière plastique renforcée par des fibres ainsi que d'une structure nervurée (9) pour raidir la coque supérieure (2), avec les étapes de procédé suivantes :
• préparation d'une coque supérieure (2) formée d'un matériau métallique,
• préparation d'un empilement de couches d'une matière plastique renforcée par des fibres avec une matrice thermoplastique, dans lequel une première couche (20) est constituée d'au moins une plaque du premier type (22) avec des fibres sous la forme de tissu et/ou de natte et/ou de fibres courtes et une seconde couche (21) est constituée d'au moins une plaque d'un second type (23) avec des fibres sous la forme de fibres courtes,
• chauffage de l'empilement à une température qui est aussi grande que la température de fusion de la matrice thermoplastique avant, pendant ou après l'introduction de l'empilement dans un outil d'extrusion (24),
• façonnage de l'empilement dans une opération d'extrusion de sorte que la première couche (20) soit convertie en coque inférieure (3) et que la seconde couche (21) soit convertie en structure nervurée (9), la coque inférieure (3) et la structure nervurée (9) étant formées d'un seul tenant,
• démoulage de la coque inférieure (3) et de la structure nervurée (9),
• assemblage de la coque supérieure (2), de la coque supérieure (3) et de la structure nervurée (9) pour former le support d'essieu (1).

13. Procédé selon la revendication 12, **caractérisé en ce que** la au moins une plaque du second type (23) est dimensionnée en fonction des besoins en matériau pour la structure nervurée (9) et/ou est agencée sur la première couche (20).

14. Procédé selon la revendication 12 ou 13, **caractérisé en ce que**, lors de l'empilement des couches, la première couche (20) n'est recouverte par la seconde couche (21) que par zones.

15. Procédé selon une ou plusieurs des revendications 12 à 14, **caractérisé en ce que** la première couche (20) est constituée de plusieurs plaques du premier type (22) de grandeur différente et ces plaques (22) sont agencées de sorte que, lors de la formation de la coque inférieure (3), des épaisseurs de coque localement différentes soient produites.

16. Procédé selon une ou plusieurs des revendications 12 à 15, **caractérisé en ce que** la au moins une plaque du premier type (21) de la première couche (20) est pourvue d'une cavité avant ou après l'empilement.

17. Procédé selon une ou plusieurs des revendications 12 à 16, **caractérisé en ce que** l'outil d'extrusion (24) comprend un outil supérieur et un outil inférieur (25, 26), dans lequel les empreintes (27) prévues pour la formation de la structure nervurée (9) se trouvent dans l'outil inférieur (26) et, lors de l'extrusion, la matrice fondue de la plaque du deuxième type (23) s'écoule soutenue par la pesanteur (G) dans ces empreintes (27).

18. Procédé selon une ou plusieurs des revendications 12 à 17, **caractérisé en ce que** des points de fixation sont formés dans la coque inférieure (3) et sont pourvues d'éléments de renfort métalliques au cours d'une étape de traitement supplémentaire.
